Europäisches Patentamt

European Patent Office

Office européen des brevets

(11) Veröffentlichungsnummer: **0 424 853 A1**

# EUROPÄISCHE PATENTANMELDUNG

(21) Anmeldenummer: 90120243.2

(22) Anmeldetag: **22.10.90**

(51) Int. Cl.5: **A47J 37/06**

(30) Priorität: 26.10.89 DE 8912666 U

(43) Veröffentlichungstag der Anmeldung:
**02.05.91 Patentblatt 91/18**

(84) Benannte Vertragsstaaten:
**AT BE CH DE FR GB IT LI LU NL SE**

(71) Anmelder: **Baumbach, Günter, Dipl.-Ing.**
**Königstor 44**
**W-3500 Kassel(DE)**

(72) Erfinder: **Baumbach, Günter, Dipl.-Ing.**
**Königstor 44**
**W-3500 Kassel(DE)**

(54) **Grillgutauflage.**

(57) Es wird eine Grillgutauflage (1) (Rost) vorgeschlagen, mit rillenförmig ausgearbeiteten Kanälen (10), zum Auffangen und zur Ableitung des sich ansammelnden Fettes, bei der optimale Grillergebnisse bei größtmöglicher Umweltfreundlichkeit erzielt werden, daß zwei Schalen (2,3) miteinander verbunden sind, zwischen denen ein Hohlraum (4) ausgebildet ist und es nicht zur Flammenbildung am Grillgut kommt.

FIG.1

## GRILLGUTAUFLAGE

Grillgutauflage (Rost) für vor allem von unten mittels Holzkohlenglut beheizte Grillgeräte, wobei diese Auflage einerseits Rippen und rillenförmig ausgebildete Kanäle zum Auffangen und zur Ableitung abtropfenden Fettes, bzw. Fleischsaftes zum Sammeln aufweist und andererseits in den Rippen und zwischen den Rinnen Öffnungen zum Durchtritt der aufsteigenden Heizluft bzw. Holzkohlenheizgase vorhanden sind.

Die geschmackliche Beeinflussung durch die Holzkohlenheizgase ist immer beliebter. Andererseits soll die Holzkohle oder dgl. beim Grillen nicht brennen, sondern lediglich glühen, zum anderen verursacht das in die Glut abtropfende Fett des Grillgutes immer wieder die Bildung von Flammen. Das führt zu Verbrennungen des dem Feuer ausgesetzten Grillgutes auf der Grillgutfläche. Beim Grillfeuer entsteht die Bildung von Benzypren, dessen Bildung und Ablagerung, weil krebserregend, vermieden werden muß.

Bei den bekannten Grillgutauflagen kommt es immer wieder zu Flammenbildung und Verbrennung des Grillgutes, mit dem die Umwelt beeinträchtigenden Qualm-oder Rauchgasbildungen bzw. störenden Geruchsbelästigungen.

Aufgabe der vorliegenden Erfindung ist es daher, unter Vermeidung der zuvor erwähnten Nachteile eine Grillgutauflage zu schaffen, die optimale biologische Grillergebnisse bei zugleich größtmöglicher Umweltfreundlichkeit gewährleistet.

Gelöst wird diese Aufgabe dabei durch die in den Patentansprüchen angegebenen baulichen Mittel und anordnungstechnischen Maßnahmen.

Die Aufgabe, Benzypren am Grillgut zu vermeiden, wird in erster Linie dadurch gelöst, daß man keine Flammen entstehen läßt bzw. die entstehenden Flammen im Keime erstickt. Dies geschieht dadurch, daß man die aus der Holzkohlenglut durch das abtropfende Fett u. dgl. evtl. hochzüngelnde Flammen auf dem Wege zu dem Grillgut auf der Grillgutauflage (Rost) sich abkühlen läßt und zum anderen die Grillgutauflage (Rost) als flachen geschlossenen Hohlkörper ausbildet, in dessen inneren Kanälen die Heizgase noch Geschmacksstoffe unterhalb der Zündtemperatur der Gase transportieren können und noch genügend Warmluft zum Garen des Grillgutes vorhanden ist, es aber nicht zu einer das Grillgut erfassenden offenen Flamme kommen kann (Davy-Prinzip).

Falls Benzyprendämpfe oder andere Schadstoffe hochsteigen, können sie sich an den Unterseiten der Rillen sowie den Unterseiten der Auffangrinnen sowie der Unterseite des Grillgutauflagerostes ablagern. Durch Umlenkung des Rauches und durch die Ausbildung als flacher Hohlraum bedingte Verwirbelung werden die ggfls. mitgeführten Schadstoffe vor Erreichen des Grillgutes weitgehend ausgeschieden.

Bei Ablagerung von Schadstoffen an der Unterseite der Grillgutauflage läßt sich die Grillgutauflage nach einmaligen Gebrauch leicht zusammendrücken und entsorgen, da sie aus flexibler Folie ausgebildet ist.

Es sind flache Grillgutauflagen vorgeschlagen worden, die einfach in der Herstellung und Entsorgung sind, jedoch nicht in der Lage sind, die Entstehung von offener Flammenbildung zu verhindern, wie z.B. die Grillgutauflage nach der EP 0214 439 bzw. 0 122 679.

Im übrigen ist die Erfindung in einem Ausführungsbeispiel dargestellt und im folgenden näher beschrieben:

Es zeigen:

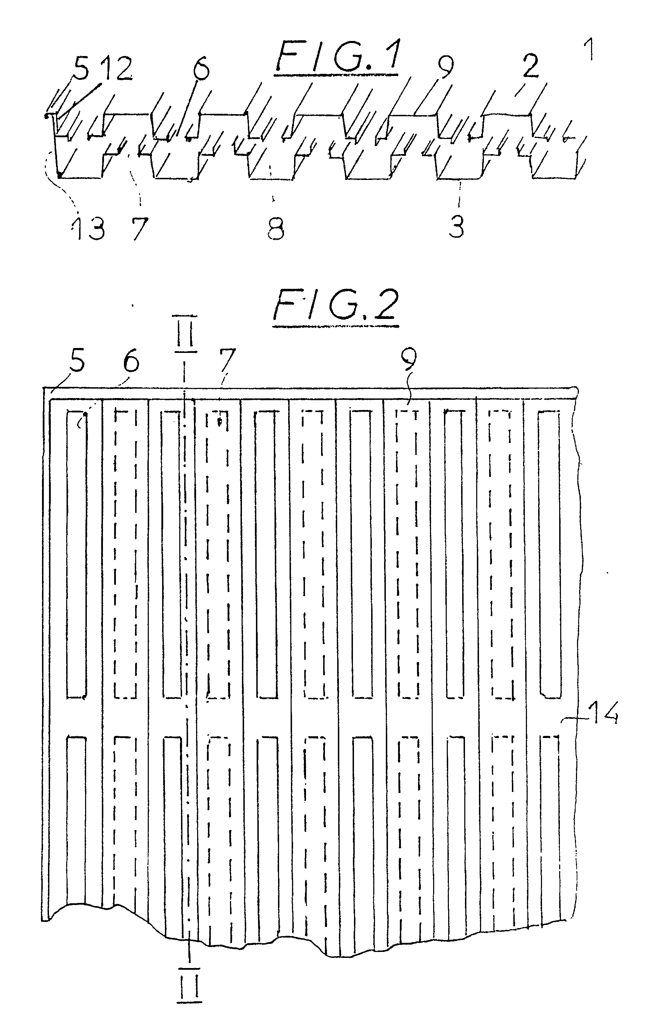

Figur 1 den Querschnitt durch einen Teil einer erfindungsgemäßen Grillgutauflage, wie sie auf ein Holzkohlengrillgerät aufgesetzt werden kann,

Figur 2 die Draufsicht auf die Oberschale einer erfindungsgemäßen Grillgutauflage,

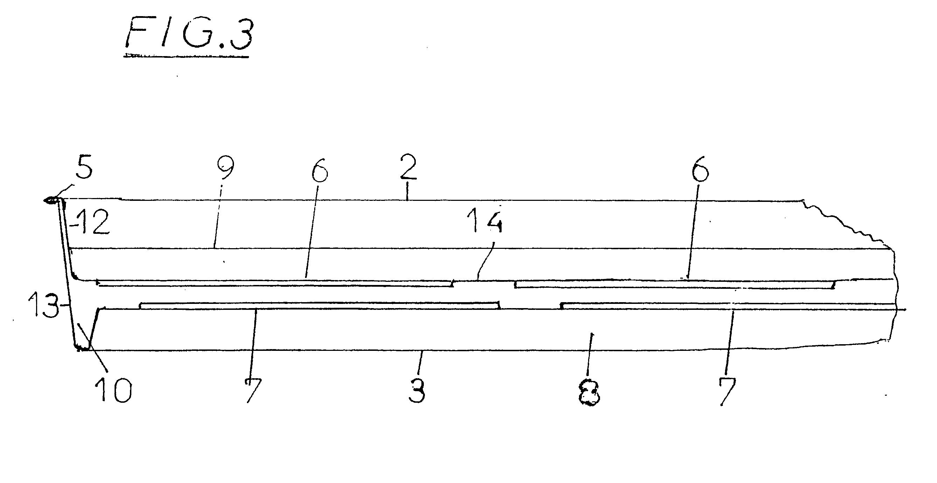

Figur 3 in vergrößerter Darstellung einen Schnitt durch Figur 2 nach der Linie II - II.

Die erfindungsgemäße Grillgutauflage wird nachstehend beschrieben und zeichnet sich generell dadurch aus, daß sie aus zwei flachen Schalen besteht, die zusammengesetzt einen Hohlraum 4 bilden. Die gesamte Grillgutauflage 1 ist rechteckig, quadratisch oder auch rund. Sie besteht aus den einstückig als Blechform, als Stanz- sowie Prägeteil ausgebildeten oberen Schale 2, sowie der unteren Schale 3, die ebenfalls einstückig für sich als Blechform, als Stanz- sowie Prägeteil ausgebildet ist. Vorzugsweise wird hier Metallfolie verwandt. Beide Schalen umschließen, miteinander verbunden, einen flachen Hohlraum 4. Die Verbindung kann entweder durch Bördeln hergestellt sein, oder durch einen Falz 5, wobei die obere Schale 2 mit der unteren Schale 3 zusammengefalzt ist. Die Verbindung der Oberschale 2 mit der Unterschale 3 erfolgt zweckmäßigerweise dadurch, daß der Falz oder die Bördelung 5 am äußersten Kragenrand 12 der Oberschale 2 mit den äußersten hochgezogenen Kragenrand 13 der Unterschale 3 verbunden wird. Sowohl die Oberschale wie die Unterschale sind mit Durchtrittsöffnungen 6 bzw. 7 versehen, die so ausgebildet sind, daß sie düsenförmig nach innen weisen. Durch diese Ausbildung wird auch die Verletzungsgefahr an nach außen vorstehenden Graten vermieden.

Die Durchtrittsöffnungen 6 in dem oberen Teil sind gegenüber der Durchtrittsöffnungen 7 in dem unteren Teil versetzt angeordnet. Die Durchtrittsöffnungen 6 und 7 sind jeweils nur in den Längsrippen 8 angeordnet. In der oberen Schale 2 sind die Auflagerippen für das Grillgut mit 9 gekennzeichnet. 10 ist die umlaufende Fettsammelrinne, 11 sind die Querrillen zu der umlaufenden Fettsammelrinne 10. 14 ist eine Versteifungsrippe in der oberen Schale. Die düsenförmig nach innen gerichteten Durchtrittsöffnungen 6 und 7 sollen eine Mindestbreite von 4 mm haben. Der Abstand der oberen Schale 2 von der unteren Schale 3 beträgt mindestens 2 mm. Die Tiefe der Auflagerippen für das Grillgut 9 sowie die Tiefe der Längsrippen 9 liegt bei 5 mm.

## Ansprüche

1. Grillgutauflage (Rost) für vor allem von unten mittels Holzkohlenglut beheizte übliche Grillgeräte, wobei diese einerseits Rippen- und Rinnenförmig ausgebildete Kanäle zum Auffangen und zur Ableitung abtrofenden Fetts bzw. Fleischsaftes aufweist und andererseits in den Rippen und zwischen den Rinnen Öffnungen zum Durchtritt der aufsteigenden Heißluft bzw. Holzkohlenheizgase vorhanden sind, dadurch gekennzeichnet, daß die Grillgutauflage (1) als geschlossener flacher Hohlkörper mit einem Hohlraum (4) ausgebildet ist mit einer unteren die Ablaufrinne (10) enthaltenen Schale (3) mit rippenförmigen Versteifungen (8) mit Heizgasdurchtrittsöffnungen (6) und einer oberen als Rost (9) für das Grillgut ausgebildeten Schale (2) mit Heizgasdurchtrittsöffnungen (7) mit Versteifungen für die Abstützung des aufgedrückten Grillgutes (11) und einem umlaufenden Bördelrand (5).

2. Grillgutauflage nach Anspruch 1, dadurch gekennzeichnet, daß diese als obere Schale (2) als Blechform einstückig als Stanz- oder Prägeteil ausgebildet ist und die Heizluftdurchtrittsöffnungen (6,7) als aufgebogen Ein- oder Materialausschnitte im Bereich der Rippen (8) und (9) angeordnet sind und daß die untere Schale (3) ebenfalls einstückig als Blechform, als Stanz- oder Prägeteil ausgebildet ist und im Bereich der umlaufenden Rinne (10) mit der oberen Schale (2) verbunden ist.

3. Grillgutauflage nach Anspruch 1 und 2, dadurch gekennzeichnet, daß die Verbindung der oberen Schale (2) mit der unteren Schale (3) durch einen Bördelrand (5) erfolgt.

4. Grillgutauflage nach Anspruch 1 und 2, dadurch gekennzeichnet, daß die Verbindung der oberen Schale (2) mit der unteren Schale (3) durch Falz (5) hergestellt ist.

5. Grillgutauflage nach Anspruch 1 und einem oder mehreren der vorhergehenden Ansprüche, dadurch gekennzeichnet, daß die Verbindung der oberen Schale (2) mit der unteren Schale (3) jeweils am oberen Rand des Kragens (12) mit dem oberen Rand des Kragens (13) durch Falz oder Bördelung (5,5) erfolgt.

6. Grillgutauflage nach Anspruch 1 und einem oder mehreren der vorhergehenden Ansprüche, dadurch gekennzeichnet, daß die Durchtrittsöffnungen (6,7) in dem oberen und unteren Teil des flachen Hohlkörpers (4) so ausgebildet sind, daß sie düsenförmig nach innen zeigen.

7. Grillgutauflage nach Anspruch 1 und einem oder mehreren der vorhergehenden Ansprüche, dadurch gekennzeichnet, daß die Durchtrittsöffnungen (6,7) in der unteren Schale (3) gegenüber den Durchtrittsöffnungen in der oberen Schale (2) versetzt angeordnet ausgebildet sind.

8. Grillgutauflage nach Anspruch 1 und einem oder mehreren der vorhergehenden Ansprüche, dadurch gekennzeichnet, daß die Durchtrittsöffnungen (6,7) jeweils in den Längsrippen (8) angeordnet sind.

9. Grillgutauflage nach Anspruch 1 und einem oder mehreren der vorhergehenden Ansprüche, dadurch gekennzeichnet, daß der Querschnitt der Rinnen (10) halbrund, trapezförmig oder rechtwinklig ausgebildet ist.

10. Grillgutauflage nach Anspruch 1 und einem oder mehreren der vorhergehenden Ansprüche, dadurch gekennzeichnet, daß der umlaufende Bördelrand (5) formstabil ausgebildet ist.

11. Grillgutauflage nach Anspruch 1 und einem oder mehreren der vorhergehenden Ansprüche, (dadurch gekennzeichnet, daß die Grillgutauflage (1) Quadrat-Rechteck- oder Rundform aufweist.

FIG.1

FIG.2

FIG.3

EP 0 424 853 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 086 797 (DITTA)<br>* Insgesamt * | 1-2,7-9, 11 | A 47<br>J 37/06 |
| X | US-A-1 956 387 (HARTMAN)<br>* Insgesamt * | 1-2,7-9, 11 | |
| A | | 3-5,10 | |

| | |
|---|---|
| | **RECHERCHIERTE SACHGEBIETE (Int. Cl.5)**<br><br>A 47 J |

Der vorliegende Recherchenbericht wurde für alle Patentansprüche erstellt

| Recherchenort | Abschlußdatum der Recherche | Prüfer |
|---|---|---|
| Den Haag | 29 Januar 91 | NGO SI XUYEN G. |